# EUROPÄISCHE PATENTSCHRIFT

(11) **EP 2 525 095 B1**
(45) Veröffentlichungstag und Bekanntmachung des Hinweises auf die Patenterteilung: **06.03.2019**
(21) Anmeldenummer: 12166330.6
(22) Anmeldetag: 02.05.2012
(51) Int. Cl.: F04B 9/00, F04B 17/02, F04B 43/00, F04B 43/02, F04B 35/00, F04B 35/01, F04B 45/04

(54) **Pumpe zur Erzeugung von Druckluft**
Pump for generating compressed air
Pompe de génération d'air comprimé

(30) Priorität: 16.05.2011 AT 6922011
(43) Veröffentlichungstag der Anmeldung: 21.11.2012
(73) Patentinhaber: Piotrowski, Józef, 1160 Wien (AT); Piotrowski, Maksym, 1160 Wien (AT)
(72) Erfinder: Piotrowski, Józef, 1160 Wien (AT)
(74) Vertreter: Röggla, Harald

(56) Entgegenhaltungen:
- DE-A1- 4 118 628
- DE-B- 1 106 026
- GB-A- 1 389 869

## Beschreibung

Die Erfindung betrifft eine Pumpe zum Pumpen eines Pumpmediums mit einer verformbaren Membran, wobei eine Pumpfläche der Membran von einem Pumpengehäuse umgeben ist, welches eine Ansaugöffnung, zum Ansaugen des Pumpmediums in das Pumpengehäuse, und eine Pumpöffnung, zum Ausstoßen des Pumpmediums aus dem Pumpengehäuse, aufweist.

Das Dokument EP 0 407 317 A1 offenbart eine solche Pumpe zum Pumpen von Luft als Pumpmedium. Über die Ansaugöffnung in das Pumpengehäuse eingesaugte Luft wird von einer Pumpfläche der verformbaren Membran bei einer Pumpöffnung des Pumpengehäuses wieder ausgestoßen. Um die Membran periodisch zu verformen, weist die bekannte Pumpe einen Elektromagneten auf, der mittelbar an einer der Pumpfläche gegenüberliegenden Antriebsfläche der Membran befestigt ist. Der durch eine Spule und ein Joch gebildete Elektromagnet ist im Magnetfeld eines Permanentmagneten vorgesehen und wird mit einem elektrischen Wechselfeld gespeist. Hierdurch führt der Elektromagnet eine mechanische Schwingbewegung aus, die auf die Antriebsfläche der Membran übertragen wird.

Diese aus der EP 0 407 317 A1 bekannte Pumpe weist mehrere Nachteile auf. Einerseits weist die Konstruktion viele Einzelteile auf, weshalb die Herstellung aufwendig und teuer ist. Andererseits sind mehrere Teile der bekannten Pumpe gegeneinander verschiebbar oder beweglich gelagert vorgesehen, weshalb die Pumpe wartungsintensiv ist und bedingt durch die vielen Verschleißteile nur eine relativ geringe Standzeit hat. Weiters hat sich gezeigt, dass die Pumpe durch die vielen bewegten Teile im Betrieb recht laut ist.

Das Dokument DE 4118628 A1 offenbart eine Pumpe mit einem Elektromotor als Antriebseinheit. An einer Antriebswelle des Elektromotors sind zweite Permanentmagnete befestigt, die in magnetischer Wirkverbindung mit an der Membran befestigten ersten Permanentmagneten stehen, um die Pumpe anzutreiben. Die offenbarte Pumpe weist eine Pumpenachse auf, in der sowohl die Antriebswelle und auch der Mittelpunkt der ersten und zweiten Permanentmagnete im Wesentlichen rotationssymmetrisch angeordnet sind.

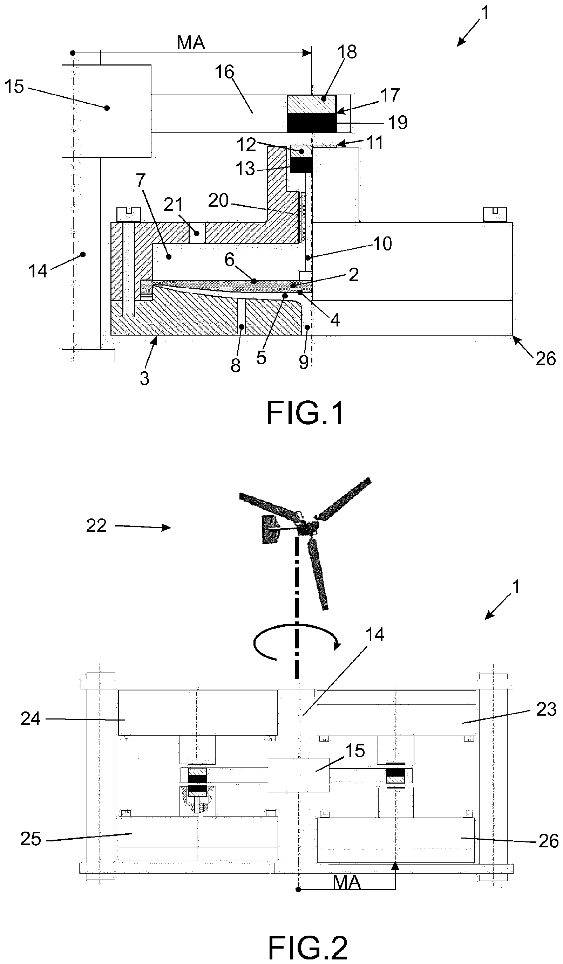

Die aus der DE 4118628 A1 bekannte Pumpe weist mehrere Nachteile auf. Durch das direkte Anbringen der ersten Permanentmagneten an der Membran kann sich diese nur sehr schlecht verformen, wodurch das von der Pumpe gepumpte Pumpvolumen wesentlich reduziert ist. Dies ist ein prinzipielles Problem dieser Konstruktion, da die zweiten Permanentmagnete einen Abstand zur Antriebswelle aufweisen müssen, um die Drehbewegung der Antriebswelle nutzen zu können. Dies bedingt aber, dass die magnetischen Pole der ersten Permanentmagnete eine größere Fläche der elastischen Membrane abdecken und deren Elastizität somit reduzieren. So deckt beispielsweise die Trägerplatte gemäß Figur 1 praktisch die gesamte Fläche der an sich elastischen Membran ab, wodurch sich diese nur in den Randbereichen verformen kann. Dies führt auch zu einem raschen Verschleiß der Membran.

Das Dokument DE 11 06 026 B offenbart eine Membran-Kleinluftpumpe mit einem Elektromotor als Antriebseinheit zum Pumpen von Medien für Messzwecke.

Der Erfindung liegt die Aufgabe zugrunde eine Pumpe zu schaffen, bei der vorstehende Nachteile vermieden sind. Erfindungsgemäß wird diese Aufgabestellung durch die Merkmale des Anspruchs 1 gelöst.

Hierdurch ist der Vorteil erhalten, dass allein durch die magnetische Anziehungskraft der aneinander vorbeibewegten ersten und zweiten Permanentmagnete die Membran verformt wird. Diese einfache Konstruktion weist praktisch keine Verschleißteile auf und ist im Betrieb sehr leise. Durch das Vorsehen von mehreren Pumpeinheiten in einer Pumpe kann die Pumpleistung der Pumpe praktisch beliebig gesteigert werden.

Durch das Vorsehen der Verbindungsstange, die an der Membran befestigt ist und den ersten Permanentmagneten trägt, ist der Vorteil erhalten, dass hierfür nur eine sehr kleine Fläche der Membran benötigt wird. Es bleibt somit praktisch die gesamte Fläche der Membran elastisch, um bei einem die Membran symmetrisch verformenden Pumphub ein großes Pumpvolumen zu pumpen.

Die Verbindungsstange ist nunmehr in dem Magnetabstand zur Antriebswelle angeordnet. Auf der Verbindungsstange ist genau ein erster Permanentmagnet und an der Antriebswelle ist ein oder sind mehrere zweite Permanentmagnete angeordnet, wobei zwischen erstem Permanentmagnet und zweitem Permanentmagneten ebenfalls der Magnetabstand vorliegt. Diese Anordnung ermöglicht mit der Antriebsenergie der einen Antriebswelle, ohne Vorsehen ineffizienter Getriebewellen oder eines eine Taumelbewegung ausführenden Trägers, mehrere Pumpeinheiten anzutreiben.

Durch das Vorsehen von mehreren zweiten mit der Antriebswelle verbundenen Permanentmagneten ist der Vorteil erhalten, dass jede Pumpeinheit mehrere Pumphübe je Umdrehung der Antriebswelle durchführt, wodurch die Pumpleistung weiter gesteigert werden kann. Durch das Vorsehen von zweiten Permanentmagneten auf durch unterschiedliche Magnetabstände festgelegten Umfängen ist der Vorteil erhalten, dass näher an den ersten Permanentmagneten vorbeibewegte zweite Permanentmagnete einen größeren Hub der Membran bewirken und weiter entfernt an den ersten Permanentmagneten vorbeibewegte zweite Permanentmagnete einen geringeren, aber kraftvolleren Hub der Membran bewirken.

Weitere vorteilhafte Ausgestaltungen des erfindungsgemäßen Systems werden im Folgenden anhand der Figuren näher erläutert.
Figur 1 zeigt einen Ausschnitt einer Schnittdarstellung einer Pumpe zum Pumpen von Luft.
Figur 2 zeigt die gesamte Pumpe gemäß Figur 1 mit vier Pumpeneinheiten und einer Windkraftturbine zum Antreiben der Antriebswelle.
Figur 3 zeigt eine Pumpe gemäß einem zweiten Ausführungsbeispiel in einer Seitenansicht und einer Draufsicht.

Figur 1 zeigt eine Pumpe 1 zum Pumpen von Luft als Pumpmedium und zum Erzeugen von Druckluft. Die Pumpe 1 weist eine verformbare Membran 2 auf, die durch eine spezielle Gummimischung besonders widerstandsfähig und dauerhaft verformbar ist. Die Membran 2 ist in einem Pumpengehäuse 3 aufgenommen, das aus zwei Gehäuseteilen zusammengesetzt ist. Durch die in dem Pumpengehäuse 3 aufgenommene Membran 2 ist der Innenraum des Pumpengehäuses 3 in zwei Teile getrennt. An einer Pumpfläche 4 der Membran 2 ist ein Pumpvolumen 5 und an einer Antriebsfläche 6 der Membran 2 ist ein Rückvolumen 7 gebildet.

Das Pumpengehäuse 3 weist mehrere Ansaugöffnungen 8, zum Ansaugen von Luft, und eine Pumpöffnung 9, zum Ausstoßen der gepumpten Luft auf. Wenn durch Verformung der Membran 2 das Pumpvolumen 5 vergrößert wird, dann strömt Luft über die Ansaugöffnungen 8 in das Pumpvolumen 5 nach. Wenn die Membran 2 nun - gegebenenfalls stoßartig - in ihre unverformte Position oder sogar in Richtung Pumpvolumen 5 verformt wird, dann wird das Pumpvolumen 5 wieder verkleinert und die in dem Pumpvolumen 5 aufgenommene Luft wird über die große Pumpöffnung 9 ausgestoßen. In den Ansaugöffnungen 8 und/oder der Pumpöffnung 9 kann auch je ein Ventil vorgesehen sein, um Luft nur in die gewünschte Richtung durch die Ansaugöffnungen 8 in das Pumpvolumen einsaugen und über die Pumpöffnung 9 ausstoßen zu lassen.

Die Pumpe 1 weist nunmehr eine an der Antriebsfläche 6 der Membran 2 befestigte Verbindungsstange 10 auf, an deren der Membran 2 gegenüberliegenden Seite ein erster Permanentmagnet 11 befestigt ist. Der erste Permanentmagnet 11 weist eine Nordpol-Hälfte 12 und eine Südpol-Hälfte 13 auf. Als erster Permanentmagnet 11 ist ein Neodynmagnet im Einsatz, da diese Magnetart besonders starke magnetische Kräfte aufweist.

Die Pumpe 1 weist nunmehr weiters eine Antriebswelle 14 auf, an der ein Flügelrad 15 befestigt ist, von dem in Figur 1 nur ein Flügel 16 dargestellt ist. In einem Magnetabstand MA von der Drehachse der Antriebswelle 14 ist an dem Flügel 16 ein zweiter Permanentmagnet 17 vorgesehen, der wie der erste Permanentmagnet 11 durch einen Neodynmagnet gebildet ist und eine Nordpol-Hälfte 18 und eine Südpol-Hälfte 19 aufweist. Die Verbindungsstange 10 ist in dem Pumpengehäuse 3 mittels eines Kugellagers 20 entlang ihrer Achse verschleißfrei und geräuscharm verschiebbar gelagert.

Wenn die Antriebswelle 14 gedreht wird und der Flügel 16 mit dem zweiten Permanentmagneten 17 in die Nähe des ersten Permanentmagneten 11 kommt, dann beginnt die magnetische Anziehungskraft zwischen der Nordpol-Hälfte 12 des ersten Permanentmagneten 11 und der Südpol-Hälfte 19 des zweiten Permanentmagneten 17 die Verbindungsstange 10 in Richtung des Flügels 16 zu bewegen. Hierdurch wird die Membran 2 verformt, weshalb das Pumpvolumen 5 zunimmt und das Rückvolumen 7 abnimmt. Überschüssige Luft im Rückvolumen 7 entströmt über Auslassöffnungen 21.

Sobald der Flügel 16 an dem ersten Permanentmagneten 11 vorbeibewegt wurde, nimmt die magnetische Anziehungskraft wieder ab, wodurch die Membran 2 einen Pumphub durchführt und ein Großteil der in dem Pumpvolumen 5 befindlichen Luft bei der Pumpöffnung 9 ausgestoßen wird. Wenn vorstehend erwähnte Ventile vorgesehen sind, dann wird die gesamte Luft bei der Pumpöffnung 9 ausgestoßen.

In Figur 2 ist die gesamte Pumpe 1 gemäß Figur 1 zu sehen, wobei symbolisch eine Windkraftturbine 22 zum Antreiben der Antriebswelle 10 dargestellt ist. Die Pumpe 1 weist vier Pumpeneinheiten 23, 24, 25 und 26 auf, von denen in Figur 1 nur die Pumpeneinheit 26 dargestellt ist. Jede der Pumpeneinheiten 23 bis 26 weist, wie die Pumpeneinheit 26, ein Pumpengehäuse 3, eine Membran 2 und einen ersten Permanentmagnet 11 auf, der über die Verbindungsstange 10 mit der Membran 2 verbunden ist. Die Pumpöffnungen 9 der vier Pumpeneinheiten 23 bis 26 sind mittels Rohren verbunden, um die Pumpleistungen der einzelnen Pumpeneinheiten 23 bis 26 zu addieren.

Die Pumpeneinheiten 23 bis 26 sind auf dem durch den Magnetabstand MA festgelegten Umfang um die Drehachse angeordnet. Hierdurch ist sichergestellt, dass jeder der zweiten Permanentmagnete 17 auf dem Flügelrad 15 auch durch das Magnetfeld jedes der ersten Permanentmagnete 11 der Pumpeneinheiten 23 bis 26 durch bewegt wird.

Besonders vorteilhaft ist, dass an benachbarten Flügeln des Flügelrads 15 angebrachte zweite Permanentmagnete 17 jeweils umgekehrt gepolt befestigt sind, wie dies anhand Figur 2 ersichtlich ist. Hierdurch wird der erste Permanentmagnet 11 beim Vorbeibewegen des Flügels 16, wie vorsehend beschrieben, vom zweiten Permanentmagneten 17 angezogen und das Pumpvolumen 5 vergrößert. Sobald die beiden Permanentmagnete 11 und 17 sich magnetisch nicht mehr beeinflussen geht die Membran 2 in ihre unverformte Position über. Wenn nun der zweite Permanentmagnet des benachbarten Flügels in das Magnetfeld des ersten Permanentmagneten 11 eindringt, dann kommt es zu einer Abstoßung und somit zu einer Verkleinerung des Pumpvolumens 5. Hierdurch werden je Umdrehung der Antriebswelle 14 zwar nur halb so viele Pumphübe durchgeführt, wie zweite Permanentmagnete an Flügeln des Flügelrads 15 vorgesehen sind, das je Pumphub ausgestoßene Luftvolumen ist allerdings wesentlich größer, wodurch vorteilhafterweise höhere Pumpdrücke erzielbar sind.

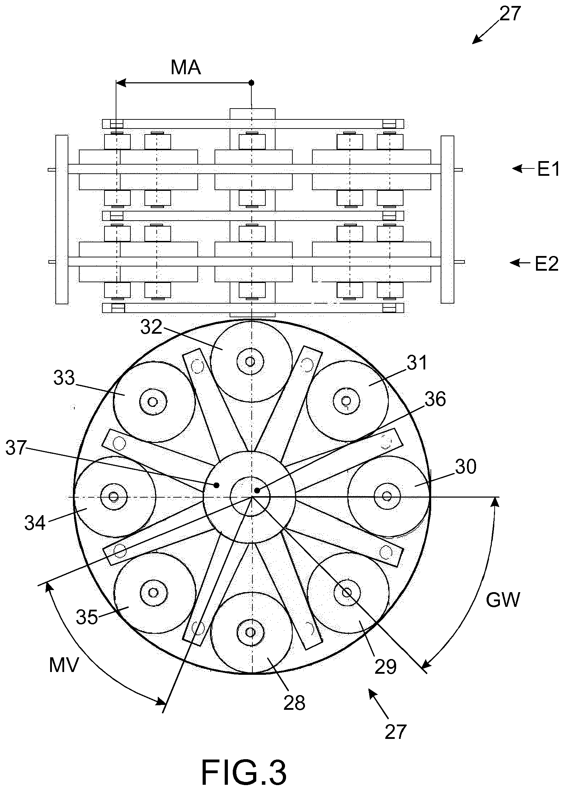

In Figur 3 ist eine Pumpe 27 gemäß einem zweiten Ausführungsbeispiel dargestellt, bei der acht Pumpeneinheiten 28 bis 35 auf dem durch den Magnetabstand MA festgelegten Umfang um die Drehachse einer Antriebswelle 36, jeweils um einen Gehäuseverdrehwinkel GW gegeneinander verdreht, in einer Ebene E1 angeordnet sind. In einer weiteren Ebene E2 sind weitere acht Pumpeneinheiten angeordnet. Diese 16 Pumpeneinheiten der Pumpe 27 werden alle durch acht zweite Permanentmagnete, die auf je einem Flügel des Flügelrads 37 vorgesehen sind angetrieben. Jeder Flügel mit je einem zweiten Permanentmagnet ist um einen Magnetverdrehwinkel MV gegen den benachbarten Flügel verdreht an dem Flügelrad 37 befestigt, das um die Antriebswelle 36 drehbar gelagert ist. Benachbarte zweite Permanentmagnete sind jeweils umgekehrt gepolt. Bei einer Umdrehung der Antriebswelle 36 führt jede Pumpeneinheit somit vier starke Pumphübe aus, wobei die Pumpleistung der 16 Pumpeneinheiten an einer gemeinsamen Pumpöffnung abgegeben wird.

Benachbarte zweite Permanentmagnete könnten auch gleich gepolt an den benachbarten Flügeln befestigt sein. In diesem Fall würde jede Pumpeinheit bei einer Umdrehung der Antriebswelle 36 acht Pumphübe, mit jeweils allerdings geringerem ausgestoßenem Luftvolumen, ausführen.

Diese Konstruktion der Pumpe 1 und der Pumpe 27 hat den großen Vorteil, dass nur wenige bewegte Teile vorgesehen sind. Diese relativ einfache Konstruktion ermöglicht eine kostengünstige Herstellung und eine lange Standzeit der Pumpen 1 und 27. Durch das Kugellager 20 und die Ausnutzung der magnetischen Anziehungskraft für den Antrieb der Pumpen 1 und 27 sind die Pumpen 1 und 27 sehr leise im Betrieb. Durch die Parallelschaltung mehrerer Pumpeneinheiten in einer Pumpe wird eine sehr große Pumpleistung erzielt.

Besonders vorteilhaft ist auch, den Magnetverdrehwinkel MV im Wesentlichen gleich mit dem Gehäuseverdrehwinkel GW festzulegen, weil dann alle Pumpeneinheiten der Pumpe 27 zu gleich den Pumphub durchführen, wodurch besonders hohe Pumpdrücke erzielt werden. Vorteilhaft ist es auch zweite Permanentmagnete in einem weiteren (kleineren oder größeren) Magnetabstand von der Drehachse der Antriebswelle an den Flügeln des Flügelrads anzubringen. Diese weiteren zweiten Permanentmagnete kommen den ersten Permanentmagneten der Pumpeneinheiten zwar nicht so nahe, wie die zweiten Permanentmagneten 28 bis 35, aber sie erhöhen trotzdem die magnetische Anziehungskraft und gleichen durch ihren additiven Magnetfeldverlauf Magnetfeldschwächen aus.

Eine erfindungsgemäße Pumpe kann eine beliebige Anzahl an Pumpeinheiten in mehreren Ebenen übereinander und auf mehreren durch unterschiedliche Magnetabstände festgelegten Umfängen aufweisen. Es können somit praktisch beliebig große Pumpvolumina je Zeiteinheit und praktisch beliebig große Pumpdrücke mit der Pumpe erzielt werden.

Durch die in Figur 2 dargestellte Pumpe 1 mit der Windkraftturbine 22 zum Antreiben der Antriebswelle 10 ist der Vorteil erhalten, dass die Windkraft zur Erzeugung von Druckluft verwendet werden kann. Da Druckluft in Druckluftspeichern einfach und zuverlässig gespeichert werden kann ist der Vorteil erhalten, dass die gespeicherte Druckluft zu einem späteren Zeitpunkt zum Antreiben beliebiger pneumatischer Systeme und Einrichtungen verwendet werden kann.

## Patentansprüche

1. Pumpe (1; 27) zum Pumpen eines Pumpmediums mit einer verformbaren Membran (2), wobei eine Pumpfläche (4) der Membran (2) von einem Pumpengehäuse (3) umgeben ist, welches eine Ansaugöffnung (8), zum Ansaugen des Pumpmediums in das Pumpengehäuse (3), und eine Pumpöffnung (9), zum Ausstoßen des Pumpmediums aus dem Pumpengehäuse (3), aufweist, wobei an einer der Pumpfläche (4) gegenüberliegenden Antriebsfläche (6) der Membran (2) eine Verbindungsstange (10) mit der Antriebsfläche (6) verbunden vorgesehen ist, **dadurch gekennzeichnet, dass** die Verbindungsstange (10) in dem Pumpengehäuse (3) entlang ihrer Achse verschiebbar gelagert, insbesondere kugelgelagert (20), geführt ist, und dass an der Verbindungsstange (10) an der der Membran (2) gegenüberliegenden Seite ein erster Permanentmagnet (11) vorgesehen ist, und dass eine von einer Antriebseinheit (22) antreibbare Antriebswelle (14; 36) in einem Magnetabstand (MA) normal zu einer Drehachse der Antriebswelle (14; 36) von der Verbindungsstange (10) vorgesehen ist, an der in dem Magnetabstand (MA) von der Drehachse der Antriebswelle (14; 36) ein mit der Antriebswelle (14; 36) verbundener zweiter Permanentmagnet (17) vorgesehen ist, der sich bei einer Umdrehung der Antriebswelle (14; 36) um die Drehachse einmal durch das Magnetfeld des ersten Permanentmagneten (11) bewegt, wodurch die Membran (2) einen Pumphub ausführt, wobei die Pumpe (1; 27) zumindest zwei Pumpeneinheiten (23 bis 26; 28 bis 35) aufweist, die je durch das Pumpengehäuse (3), die Membran (2) und den zumindest einen ersten Permanentmagneten (11) gebildet sind, wobei die Pumpeneinheiten (23 bis 26; 28 bis 35) im Wesentlichen auf einem durch den Magnetabstand (MA) festgelegten Umfang zueinander um einen Gehäuseverdrehwinkel (GW) beabstandet um die Drehachse (14; 36) angeordnet sind.

2. Pumpe (1; 27) gemäß Anspruch 1, **dadurch gekennzeichnet, dass** die Pumpe (1; 27) zumindest zwei zweite Permanentmagnete (17) aufweist, die im Wesentlichen auf dem durch den Magnetabstand (MA) festgelegten Umfang zueinander um einen Magnetverdrehwinkel (MV) beabstandet um die Drehachse (14; 36) angeordnet sind.

3. Pumpe (1; 27) gemäß Anspruch 2, **dadurch gekennzeichnet, dass** jeweils zueinander um den Magnetverdrehwinkel (MV) beabstandete zweite Permanentmagnete (17) mit umgekehrter magnetischer Polung angeordnet sind.

4. Pumpe (1; 27) gemäß Anspruch 1 und 2, **dadurch gekennzeichnet, dass** der Gehäuseverdrehwinkel (GW) und der Magnetverdrehwinkel (MV) im Wesentlichen übereinstimmen und die gleiche Anzahl an Pumpeneinheiten (23 bis 26; 28 bis 35) und zweiten Permanentmagneten (17) im Wesentlichen auf dem durch den Magnetabstand (MA) festgelegten Umfang vorgesehen sind.

5. Pumpe gemäß Anspruch 4, **dadurch gekennzeichnet, dass** in zumindest einem weiteren Magnetabstand zumindest ein weiterer zweiter Permanentmagnet an der Antriebswelle und insbesondere auch zumindest eine weitere Pumpeneinheit vorgesehen sind.

6. Pumpe (1; 27) gemäß einem der Ansprüche 1 bis 5, **dadurch gekennzeichnet, dass** an der Antriebswelle (14; 36) ein Flügelrad (15; 37) vorgesehen ist, an dem je Flügel (16) zumindest einer der zweiten Permanentmagneten (17) vorgesehen ist.

7. Pumpe gemäß Anspruch 1, **dadurch gekennzeichnet, dass** zumindest zwei Pumpeneinheiten (23, 26) auf dem durch den Magnetabstand (MA) festgelegten Umfang um die Drehachse (14; 36) zueinander gegenüberliegend angeordnet den zweiten Permanentmagneten (17) zwischen sich aufnehmen.

8. Pumpe (1) gemäß einem der Ansprüche 1 bis 7, **dadurch gekennzeichnet, dass** die Antriebseinheit durch eine Windkraftturbine (22) gebildet ist.

## Claims

1. A pump (1; 27) for pumping a pumping medium having a deformable membrane (2), wherein a pumping surface (4) of the membrane (2) is surrounded by a pump housing (3), which has a suction opening (8) for sucking the pumping medium into the pump housing (3) and a pumping opening (9) for discharging the pumping medium out of the pump housing (3), wherein
there is provided on a drive surface (6) of the membrane (2) opposite to the pumping surface (4) a connecting rod (10) connected to the drive surface (6), **characterized in that** the connecting rod (10) is mounted slidable in the pump housing (3) along the axis thereof, in particular bear-mounted (20), and that there is provided on the connecting rod (10) at the side opposite to the membrane (2) a first permanent magnet (11), and that a drive shaft (14; 36) that may be driven by a drive unit (22) is provided at a magnet distance (MA) perpendicularly to the rotational axis of the drive shaft (14; 26) from the connecting rod (10), at which there is provided at the magnet distance (MA) from the rotational axis of the drive shaft (14; 26) a second permanent magnet (17) connected to the drive shaft (14; 36), which moves once through the magnetic field of the first permanent magnet (11) during one turn of the drive shaft (14; 36) about the rotational axis, whereby the membrane (2) carries out a pumping stroke, wherein the pump (1; 27) has at least two pump units (23 to 26; 28 to 35), which are formed respectively by the pump housing (3), the membrane (2) and the at least one first permanent magnet (11), wherein the pump units (23 to 28; 28 to 35) are arranged essentially on a circumference determined by the magnet distance (MA) spaced apart from one another by a housing torsion angle (GW) about the rotational axis (14: 36).

2. A pump (1; 27) according to claim 1, **characterized in that** the pump (1; 27) has at least two second permanent magnets (17), which are arranged essentially on a circumference determined by the magnet distance (MA) spaced apart from one another by a magnet torsion angle (MV) about the rotational axis (14; 36).

3. A pump (1; 27) according to claim 2, **characterized in that** there are arranged two permanent magnets (17) that are spaced apart from one another respectively by the magnet torsion angle (MV) and have a reversed magnetic polarity.

4. A pump (1; 27) according to claim 1 and 2, **characterized in that** the housing torsion angle (GW) and the magnet torsion angle (MW) are essentially the same and that the same number of pump units (23 to 26; 28 to 35) and second permanent magnets (17) is provided essentially on the circumference determined by the magnet distance (MA).

5. A pump according claim 4, **characterized in that** there are provided at least one further second permanent magnet at the drive shaft at least at a further magnet distance and in particular also at least one further pump unit.

6. A pump (1; 27) according to any of claims 1 to 5, **characterized in that** there is provided an impeller (15; 37) at the drive shaft (14: 36), at which there is provided at least one of the second permanent magnets (18) per vane (16).

7. A pump according to claim 1, **characterized in that** at least two pump units (23, 26) that are arranged on the circumference determined by the magnet distance (MA) about the rotational axis (14; 36) opposite to one another accommodate the second permanent magnet (17) there between.

8. A pump (1) according to any of claims 1 to 7, **characterized in that** the drive unit is formed by a wind turbine (22).

## Revendications

1. Pompe (1 ; 27) pour pomper un milieu à pomper comprenant une membrane déformable (2), dans laquelle une surface de pompage (4) de la membrane (2) est entourée par un boîtier de pompe (3) lequel comporte une ouverture d'aspiration (8), destinée à l'aspiration du milieu à pomper jusque dans le boîtier de pompe (3), et une ouverture de pompe (9), pour le refoulement du milieu à pomper hors du boîtier de pompe (3), dans laquelle il est prévu, sur une surface d'entraînement (6) de la membrane (2) à l'opposé de la surface de pompage (4), une tige de liaison (10) reliée à la surface d'entraînement (6),
**caractérisée en ce que**
la tige de liaison (10) est guidée en translation le long de son axe dans le boîtier de pompe (3), au moyen d'un palier et en particulier d'un palier à billes (20), et **en ce qu'**il est prévu sur la tige de liaison (10) un premier aimant permanent (11) sur le côté opposé à la membrane (2), et **en ce qu'**il est prévu un arbre d'entraînement (14 ; 36), susceptible d'être entraîné par l'unité d'entraînement (22), écartés de la tige de liaison (10) à une distance magnétique (MA) perpendiculaire à un axe de rotation de l'arbre d'entraînement (14 ; 36), arbre sur lequel il est prévu, à distance magnétique (MA) vis-à-vis de l'axe de rotation de l'arbre d'entraînement (14 ; 36), un second aimant permanent (17) relié à l'arbre d'entraînement (14 ; 36), ledit second aimant permanent (17) se déplaçant, lors d'une rotation de l'arbre d'entraînement (14 ; 36) autour de l'axe de rotation, une fois à travers le champ magnétique du premier aimant permanent (11), en raison de quoi la membrane (2) exécute une course de pompage, ladite pompe (1 ; 27) comprenant au moins deux unités de pompage (23 à 26 ; 28 à 35), qui sont formées chacune par le boîtier de pompe (3), par la membrane (2), et par ledit au moins un premier aimant permanent (11), lesdites unités de pompe (23 à 26 ; 28 à 35) étant agencées essentiellement autour de l'axe de rotation (14 ; 36) sur une périphérie déterminée par la distance magnétique (MA) en étant écartées les unes des autres à raison d'un angle de rotation du boîtier (GW).

2. Pompe (1 ; 27) selon la revendication 1, **caractérisée en ce que** la pompe (1 ; 27) comprend au moins deux seconds aimants permanents (17), qui sont agencés essentiellement autour de l'axe de rotation (14 ; 36) sur une périphérie déterminée par la distance magnétique (MA) en étant écartés les uns des autres à raison d'un angle de rotation magnétique (MV).

3. Pompe (1 ; 27) selon la revendication 2, **caractérisée en ce que** deux aimants permanents (17) présentant une polarité magnétique inversée sont agencés en étant écartés respectivement l'un de l'autre à raison de l'angle de rotation magnétique (MV).

4. Pompe (1 ; 27) selon la revendication 1 et 2, **caractérisée en ce que** l'angle de rotation de boîtier (GW) et l'angle de rotation magnétique (MV) sont sensiblement identiques et il est prévu le même nombre d'unités de pompes (23 à 26 ; 28 à 35) et de seconds aimants permanents (17) essentiellement sur la périphérie définie par la distance magnétique (MA).

5. Pompe selon la revendication 4, **caractérisée en ce qu'**il est prévu au moins un autre second aimant permanent sur l'arbre d'entraînement au moins à une autre distance magnétique, et en particulier également au moins une autre unité de pompe.

6. Pompe (1 ; 27) selon l'une des revendications 1 à 5, **caractérisée en ce qu'**il est prévu une roue à aubes (15 ; 37) sur l'arbre d'entraînement (14 ; 36), et **en ce que** l'un des seconds aimants permanents (17) est prévu sur chaque aube (16).

7. Pompe selon la revendication 1, **caractérisée en ce qu'**au moins deux unités de pompes (23, 26) sont agencées à l'opposé l'une de l'autre autour de l'axe de rotation (14 ; 36) sur la périphérie définie par la distance magnétique (MA), et reçoivent entre elles les seconds aimants permanents (17).

8. Pompe (1) selon l'une des revendications 1 à 7, **caractérisée en ce que** l'unité d'entraînement est formée par une turbine éolienne (22).
